# FASCICULE DE BREVET EUROPEEN

(11) **EP 1 101 671 B1**
(45) Date de publication et mention de la délivrance du brevet: **06.07.2005**
(21) Numéro de dépôt: 00403087.0
(22) Date de dépôt: 07.11.2000
(51) Int. Cl.: B60R 25/00

(54) **Procédé et système de transmission bidirectionnelle sécurisée de données**
Verfahren und System zur gesicherten bidirektionalen Datenübertragung
Method and system of secured bidirectional transmission of data

(30) Priorité: 15.11.1999 FR 9914271
(43) Date de publication de la demande: 23.05.2001
(73) Titulaire: VALEO SECURITE HABITACLE S.A.S., 94042 Créteil Cédex (FR)
(72) Inventeur: Avenel, Jean-Jacques, 94430 Chennevieres (FR)
(74) Mandataire: Rosolen-Delarue, Katell

(56) Documents cités:
- EP-A- 0 521 547
- GB-A- 2 282 687
- US-A- 5 616 966

## Description

La présente invention concerne un procédé de transmission bidirectionnelle, sans fil, de données entre deux ensembles émetteurs-récepteurs, et un système pour sa mise en oeuvre.

Un procédé, resp. un système, selon le préambule de la revendication 1, resp. 6, est par principe connu de l'état de la technique.

Dans un système d'accès, par exemple du type dit "mains libres", permettant l'accès à un espace clos, en particulier à un véhicule automobile, et/ou l'exécution d'une fonction dans ledit espace clos, par exemple le démarrage du véhicule automobile, un tel procédé est utilisé pour établir un échange à distance de données entre un dispositif de reconnaissance installé dans l'espace clos et un organe d'identification destiné à être porté par un utilisateur, l'accès à l'espace clos et/ou l'exécution de ladite fonction n'étant autorisé que lorsque le dispositif de reconnaissance a authentifié l'organe d'identification. Toutefois, un tel système d'accès court le risque d'être piraté par un système d'émission-réception intercalé dans la communication sans fil entre le dispositif de reconnaissance et l'organe d'identification, cet ensemble d'émission-réception pirate servant, en fait, uniquement de répéteur.

Par exemple, deux malfaiteurs agissant ensemble pourraient obtenir l'accès à l'espace clos de la manière suivante. Un premier malfaiteur, équipé d'un premier système d'émission-réception pirate installé par exemple dans une sacoche, s'approche du véhicule fermé que vient de quitter un utilisateur autorisé, tandis qu'un second malfaiteur, équipé d'un second système d'émission-réception pirate semblable à celui du premier malfaiteur, suit l'utilisateur autorisé portant l'organe d'identification. Lorsque l'utilisateur autorisé est suffisamment éloigné de son véhicule automobile, le premier malfaiteur déclenche une opération d'identification, par exemple en appuyant sur un bouton de commande situé sur la portière du véhicule automobile. Le dispositif de reconnaissance installé dans le véhicule automobile émet alors des signaux qui sont relayés par le premier système d'émission-réception du premier malfaiteur vers le second système d'émission-réception du second malfaiteur, qui relaye à son tour les signaux du dispositif de reconnaissance vers l'organe d'identification. Ce dernier va alors répondre en renvoyant le code autorisé, qui est retransmis successivement par le second système d'émission-réception du second malfaiteur, puis par le premier système d'émission-réception du premier malfaiteur jusqu'au dispositif de reconnaissance, lequel va alors commander le déverrouillage des serrures du véhicule automobile et donner ainsi accès au véhicule au premier malfaiteur.

Pour résoudre ce problème, on peut envisager d'analyser le temps de retard entre le signal émis par le dispositif de reconnaissance et le signal renvoyé par l'organe d'identification. Plus la mesure de ce temps sera fine, plus grande sera la possibilité de détecter des retards parasites faibles. En outre, la finesse de la mesure sera d'autant meilleure que la fréquence utilisée pour la communication aller-retour sera grande, car les constantes de retard dues aux différents filtres et circuits de traitement seront plus faibles. Etant donné que l'on souhaite interdire l'accès au véhicule lorsque la transmission bidirectionnelle s'effectue sur une distance supérieure à environ 5 à 10 mètres, il serait nécessaire de pouvoir mesurer une variation de temps de communication de l'ordre de 100 à 300 ns, ce temps de retard correspondant à la durée de transmission du signal en fonction de la distance séparant le dispositif de reconnaissance et l'organe d'identification.

Dans un système connu, le signal d'interrogation est émis par le dispositif de reconnaissance en basse fréquence, par exemple à 125 kHz, et l'organe d'identification renvoie un signal de réponse en radio fréquence, par exemple à 433,92 MHz. Dans un tel système, le dispositif de reconnaissance reçoit le signal de réponse avec un temps de retard qui est la somme du temps lié à la bande passante des circuits électroniques et du temps lié à la distance séparant le dispositif de reconnaissance et l'organe d'identification. Le temps lié à la distance est de l'ordre de 6,6 ns/m, alors que le temps lié à la bande passante peut être de l'ordre de 120 µs avec un sautillement propre de 8 µs. On comprend donc que pour calculer un retard de l'ordre de 300 ns, ce retard est noyé dans la résolution du système qui est supérieure à 8 µs. En fait, pour détecter un retard de 300 ns, il faudrait que le temps lié à la bande passante ne soit pas supérieur à 1 µs avec un sautillement propre de 100 à 200 ns au maximum. Cela serait réalisable en pratique, mais à condition d'utiliser du matériel électronique dont le coût serait totalement hors de proportion et incompatible avec les exigences de faibles coûts auxquelles on doit faire face en matière d'équipements pour véhicules automobiles.

Pour résoudre le problème susmentionné, on peut également envisager d'analyser la fréquence du signal reçu par le dispositif de reconnaissance, par rapport à la fréquence que devrait avoir le signal émis par l'organe d'identification et qui est attendue par le dispositif de reconnaissance. En effet, si des systèmes d'émission-réception pirates sont intercalés entre le dispositif de reconnaissance et l'organe d'identification, ces systèmes d'émission-réception pirates vont nécessairement introduire un décalage de fréquence entre le signal renvoyé par l'organe d'identification et le signal effectivement reçu par le dispositif de reconnaissance.

Toutefois, d'un point de vue pratique, commercial et industriel, les quartz pouvant être utilisés dans un système d'accès du genre sus-indiqué ont, au mieux, une stabilité de l'ordre de 4.10⁻⁵. Il en résulte que pour une fréquence de 433,92 MHz, on a une variation possible dans le temps de 17,35 kHz. Or, on trouve aujourd'hui relativement facilement dans le commerce des sources de fréquence de 10 MHz ayant une stabilité de 5.10⁻⁷, soit une variation possible de 5 Hz. Si des malfaiteurs utilisent des systèmes d'émission-réception pirates incluant une telle source de fréquence à 10 MHz pour obtenir une fréquence d'environ 430 MHz, cette fréquence aura donc une précision de 215 Hz. Dans ces conditions, le décalage de fréquence susmentionné, introduit par les deux systèmes d'émission-réception pirates intercalés entre le dispositif de reconnaissance et l'organe d'identification, aura au maximum une valeur de 2 x 215 Hz, soit 430 Hz. Un tel décalage est bien inférieur à la variation possible de 17,35 kHz du signal de 433,92 MHz engendré par l'organe d'identification, de sorte que, dans ce cas, il est impossible de détecter un relayage non autorisé de signaux entre le dispositif de reconnaissance et l'organe d'identification ou, d'une manière plus générale, un relayage non autorisé de signaux entre deux ensembles émetteurs-récepteurs.

La présente invention a donc pour but de résoudre ce problème en fournissant un procédé de transmission bidirectionnelle de données, dans lequel il est possible de détecter un écart de fréquence, même très faible, introduit par un relayage non autorisé de signaux entre les deux ensembles émetteurs-récepteurs.

A cet effet, l'invention fournit un procédé de transmission bidirectionnelle, sans fil, de données entre deux ensembles émetteurs-récepteurs, l'émetteur d'un premier des deux ensembles engendrant un premier signal à une première fréquence, qui est émis vers le récepteur du second des deux ensembles, et l'émetteur du second des deux ensembles engendrant un second signal à une seconde fréquence, qui est émis vers le récepteur du premier ensemble, caractérisé en ce qu'il consiste :
a) du côté du premier ensemble, à engendrer à partir dudit premier signal à la première fréquence f₁, au moyen d'une première boucle verrouillée en phase, un troisième signal ayant une troisième fréquence f₃ qui est égale à la première fréquence f₁ multipliée par un premier nombre ;
b) du côté du second ensemble, à engendrer ledit second signal à partir du premier signal reçu par ledit second ensemble, au moyen d'une seconde boucle verrouillée en phase, de telle façon que la seconde fréquence f₂ du second signal soit égale à la première fréquence f₁ multipliée par un second nombre ;
c) du côté du premier ensemble :
   c1) à mélanger un signal reçu par ce premier ensemble avec le troisième signal engendré par la première boucle verrouillée en phase, afin d'obtenir un signal de mélange ;
   c2) à filtrer le signal de mélange afin d'obtenir un signal filtré ayant une fréquence correspondant à la différence entre la fréquence du signal reçu par le premier ensemble et la troisième fréquence f₃ du troisième signal ;
   c3) à analyser ledit signal filtré pour déterminer s'il a une fréquence prédéterminée qui est égale à la première fréquence f₁ multipliée par un nombre entier, positif ou nul, égal à la valeur absolue de la différence des premier et second nombres, et qui indique que le signal reçu par le premier ensemble est le second signal à la seconde fréquence f₂ émis par le second ensemble, ou s'il a une fréquence qui est différente de ladite fréquence prédéterminée et qui indique que ledit signal reçu par le premier ensemble est un signal parasite non autorisé ;
   c4) à autoriser un traitement ou une utilisation dudit signal reçu par le premier ensemble seulement si le résultat de l'analyse indique que le signal filtré a une fréquence égale à ladite fréquence prédéterminée.

Etant donné que si des malfaiteurs utilisent des systèmes d'émission-réception pirates pour relayer les premier et second signaux entre les premier et second ensembles émetteurs-récepteurs, il se produira nécessairement un décalage de fréquence entre le second signal émis par le second ensemble émetteur-récepteur et le signal reçu par le premier ensemble émetteur-récepteur, donc également entre ce dernier signal et le troisième signal engendré à l'intérieur du premier ensemble émetteur-récepteur, on obtiendra donc dans ce cas un signal filtré ayant une fréquence différente de ladite fréquence prédéterminée et le traitement ou l'utilisation du signal reçu par le premier ensemble émetteur-récepteur ne sera donc pas autorisé.

Dans un premier mode de réalisation du procédé selon l'invention, les premier et second nombres ont la même valeur, de telle sorte que les seconde et troisième fréquences f₂ et f₃ aient des valeurs égales, ladite fréquence prédéterminée ayant une valeur nulle ; l'analyse du signal filtré (étape c3) consiste alors à déterminer si le signal filtré a une fréquence nulle indiquant que le signal reçu par le premier ensemble est le second signal émis par le second ensemble, ou s'il a une fréquence non nulle indiquant que ledit signal reçu par le premier ensemble est un signal parasite non autorisé.

Le procédé selon ce premier mode de réalisation peut en outre consister à faire varier en synchronisme et de façon identique la seconde fréquence des second et troisième signaux selon une séquence aléatoire prédéfinie mémorisée dans les premier et second ensembles.

Dans un second mode de réalisation du procédé selon l'invention, les premier et second nombres ont des valeurs différentes, de telle sorte que les seconde et troisième fréquences f₂ et f₃ aient des valeurs différentes ; l'analyse du signal filtré (étape c3) consiste alors :
c3.1) à diviser la fréquence du signal filtré par ledit nombre entier de façon à obtenir un quatrième signal ;
c3.2) à mélanger le quatrième signal avec le premier signal engendré par l'émetteur du premier ensemble afin d'obtenir un autre signal de mélange ;
c3.3) à filtrer ledit autre signal de mélange afin d'obtenir un signal de battement ayant une fréquence correspondant à la différence entre la fréquence du quatrième signal et la première fréquence f₁ dudit premier signal ; et
c3.4) à analyser ledit signal de battement pour déterminer s'il a une fréquence nulle indiquant que le signal reçu par le premier ensemble est le second signal émis par le second ensemble, ou s'il a une fréquence non nulle indiquant que ledit signal reçu par le premier ensemble est un signal parasite non autorisé.

Dans une application du procédé pour la transmission bidirectionnelle sécurisée de données, sans fil, dans un système d'accès du type dit "mains libres" tel que défini plus haut, le procédé consiste à engendrer lesdits premier et troisième signaux du côté du dispositif de reconnaissance et ledit second signal du côté de l'organe d'identification, et à autoriser le traitement dudit signal reçu par le dispositif de reconnaissance pour l'authentification de l'organe d'identification seulement si le résultat de ladite analyse indique que ledit signal filtré a une fréquence égale à ladite fréquence prédéterminée.

L'invention a également pour objet un système de transmission bidirectionnelle de données pour la mise en oeuvre du procédé défini ci-dessus, du type comprenant deux ensembles émetteurs-récepteurs, l'émetteur d'un premier des deux ensembles comportant un premier générateur de signal qui engendre un premier signal à une première fréquence f₁ et qui est relié à une première antenne émettant ledit premier signal vers le récepteur du second des deux ensembles, et l'émetteur du second des deux ensembles comportant un second générateur de signal qui engendre un second signal à une seconde fréquence f₂ et qui est relié à une seconde antenne émettant ledit second signal vers le récepteur du premier ensemble, caractérisé en ce que :
a) le premier ensemble comprend en outre une première boucle verrouillée en phase, dont l'entrée est reliée au premier générateur de signal pour recevoir ledit premier signal à la première fréquence f₁ à titre de signal de référence, et qui délivre en sortie un troisième signal ayant une troisième fréquence f₃ qui est égale à la première fréquence f₁ multipliée par un premier nombre ;
b) le second générateur de signal du second ensemble est constitué par une seconde boucle verrouillée en phase, dont l'entrée est reliée au récepteur dudit second ensemble pour recevoir, à titre de signal de référence, ledit premier signal f₁ émis par ladite première antenne, et dont la sortie est reliée à ladite seconde antenne pour émettre ledit second signal à la seconde fréquence f₂, la seconde boucle étant conçue de telle façon que ladite seconde fréquence f₂ du second signal soit égale à la première fréquence f₁ multipliée par un second nombre ;
c) le premier ensemble comprend en outre un mélangeur ayant une première entrée reliée au récepteur dudit premier ensemble, une seconde entrée reliée à la première boucle pour recevoir ledit troisième signal, et une sortie délivrant un signal de mélange, un filtre ayant une entrée reliée à la sortie du mélangeur et une sortie délivrant un signal filtré ayant une fréquence correspondant à la différence entre les fréquences des signaux appliqués aux première et seconde entrées du mélangeur, un circuit d'analyse qui est relié à la sortie du filtre et qui détermine si le signal filtré a une fréquence prédéterminée qui est égale à la première fréquence f₁ multipliée par un nombre entier, positif ou nul, égal à la valeur absolue de la différence des premier et second nombres, et un circuit porte qui est relié au circuit d'analyse et au récepteur dudit premier ensemble et qui laisse passer ledit signal reçu par le récepteur du premier ensemble, vers un circuit de traitement ou d'utilisation dudit signal reçu, seulement si ledit circuit d'analyse a déterminé que ledit signal filtré a ladite fréquence prédéterminée.

Dans une forme de réalisation de la présente invention, chacune des première et seconde boucles verrouillées en phase comprend un détecteur de phase qui reçoit sur une première entrée ledit premier signal à la première fréquence f₁, et dont la sortie est reliée, à travers un circuit intégrateur et un filtre passe-bas montés en série, à l'entrée de commande d'un oscillateur commandé en tension, dont la sortie est reliée à travers un diviseur de fréquence à une seconde entrée dudit détecteur de phase, la sortie de l'oscillateur commandé en tension de la première boucle délivrant ledit troisième signal à la troisième fréquence f₃ et la sortie de l'oscillateur commandé en tension de la seconde boucle délivrant ledit second signal à la seconde fréquence f₂, le diviseur de fréquence de la première boucle verrouillée en phase divisant la fréquence par ledit premier nombre et le diviseur de fréquence de la seconde boucle verrouillée en phase divisant la fréquence par ledit second nombre.

Dans un premier mode de réalisation du système selon l'invention, les premier et second nombres ont la même valeur, de telle sorte que les seconde et troisième fréquences f₂ et f₃ aient des valeurs égales, ladite fréquence prédéterminée ayant une valeur nulle, ledit filtre est un filtre passe-bas délivrant sur sa sortie un signal de battement entre le signal reçu par le récepteur du premier ensemble émetteur-récepteur et ledit troisième signal à la troisième fréquence f₃, et ledit circuit d'analyse détermine si ledit signal de battement a une fréquence nulle indiquant que le signal reçu par le récepteur du premier ensemble émetteur-récepteur est ledit second signal à la seconde fréquence f₂, ou s'il a une fréquence non nulle indiquant que ledit signal reçu par ledit premier ensemble est un signal parasite non autorisé.

Chacun des premier et second ensembles peut en outre comprendre un moyen pour mémoriser une séquence aléatoire prédéfinie de valeurs et pour faire varier ladite valeur des premier et second nombres dans le diviseur de fréquence respectif de chacune des première et seconde boucles verrouillées en phase conformément à ladite séquence aléatoire prédéfinie, en synchronisme et de façon identique pour les deux boucles.

Dans le premier mode de réalisation du système selon l'invention, ledit mélangeur peut être un mélangeur double à quadrature comprenant un premier et un second mélangeur qui ont chacun une première entrée reliée à la sortie du récepteur dudit premier ensemble émetteur-récepteur et une seconde entrée qui est reliée à la sortie de la première boucle verrouillée en phase, directement pour le premier mélangeur et à travers un déphaseur à 90° pour le second mélangeur, la sortie du premier mélangeur étant reliée à travers un premier circuit passe-bas à une première sortie du double mélangeur à quadrature et la sortie du second mélangeur étant reliée à travers un second circuit passe-bas à une seconde sortie dudit mélangeur double à quadrature.

De préférence, l'une des première et seconde sorties du mélangeur double à quadrature est reliée à l'entrée de données d'une bascule de type D, l'autre des première et seconde sorties du mélangeur double à quadrature est reliée à l'entrée d'horloge de ladite bascule, et la sortie de ladite bascule est reliée audit circuit de traitement ou d'utilisation à travers ledit circuit porte sous la commande dudit circuit d'analyse.

De préférence, ledit circuit d'analyse est relié à la sortie de l'un des premier et second filtres passe-bas du double mélangeur à quadrature.

Dans un second mode de réalisation du système selon l'invention, les premier et second nombres ont des valeurs différentes, de telle sorte que les seconde et troisième fréquences f₂ et f₃ ont des valeurs différentes, ledit filtre est un filtre passe-bande, et ledit circuit d'analyse comprend :
a) un autre diviseur de fréquence ayant une entrée reliée à la sortie dudit filtre passe-bande et une sortie délivrant un quatrième signal ayant une fréquence qui est égale au quotient de la fréquence du signal filtré sortant du filtre passe-bande par ledit nombre entier ;
b) un autre mélangeur ayant une première entrée reliée à la sortie dudit autre diviseur de fréquence pour recevoir ledit quatrième signal, une seconde entrée reliée au premier générateur de signal dudit premier ensemble émetteur-récepteur pour recevoir ledit premier signal à la première fréquence f₁, et une sortie délivrant un autre signal de mélange ;
c) un filtre passe-bas ayant une entrée reliée à la sortie de l'autre mélangeur et une sortie délivrant un signal de battement entre lesdits quatrième et premier signaux ;
d) et un circuit qui est relié à la sortie du filtre passe-bas et qui détermine si ledit signal de battement a une fréquence nulle indiquant que le signal reçu par le récepteur du premier ensemble émetteur-récepteur est ledit second signal à la seconde fréquence f₂, ou s'il a une fréquence non nulle indiquant que ledit signal reçu par ledit premier ensemble est un signal parasite non autorisé.

Dans une application du système selon l'invention à un système d'accès du type dit "mains libres" défini plus haut, ledit premier ensemble émetteur-récepteur, y compris la première boucle verrouillée en phase, le mélangeur, le filtre, le circuit d'analyse et le circuit porte, sont installés dans le dispositif de reconnaissance, tandis que ledit second ensemble émetteur-récepteur, y compris la seconde boucle verrouillée en phase, sont installés dans ledit dispositif d'identification.

D'autres caractéristiques et avantages de la présente invention ressortiront mieux au cours de la description qui va suivre d'un mode de réalisation de l'invention donné à titre d'exemple en référence aux dessins annexés sur lesquels :
- la figure 1 est un schéma fonctionnel montrant un système de transmission bidirectionnelle de données conforme à un premier mode de réalisation de la présente invention ;
- la figure 2 est un schéma fonctionnel montrant, plus en détail, un mode particulier de réalisation d'une partie du circuit de la figure 1 ;
- la figure 3 est un schéma semblable à la figure 1, montrant un système de transmission bidirectionnelle de données selon un second mode de réalisation de la présente invention.

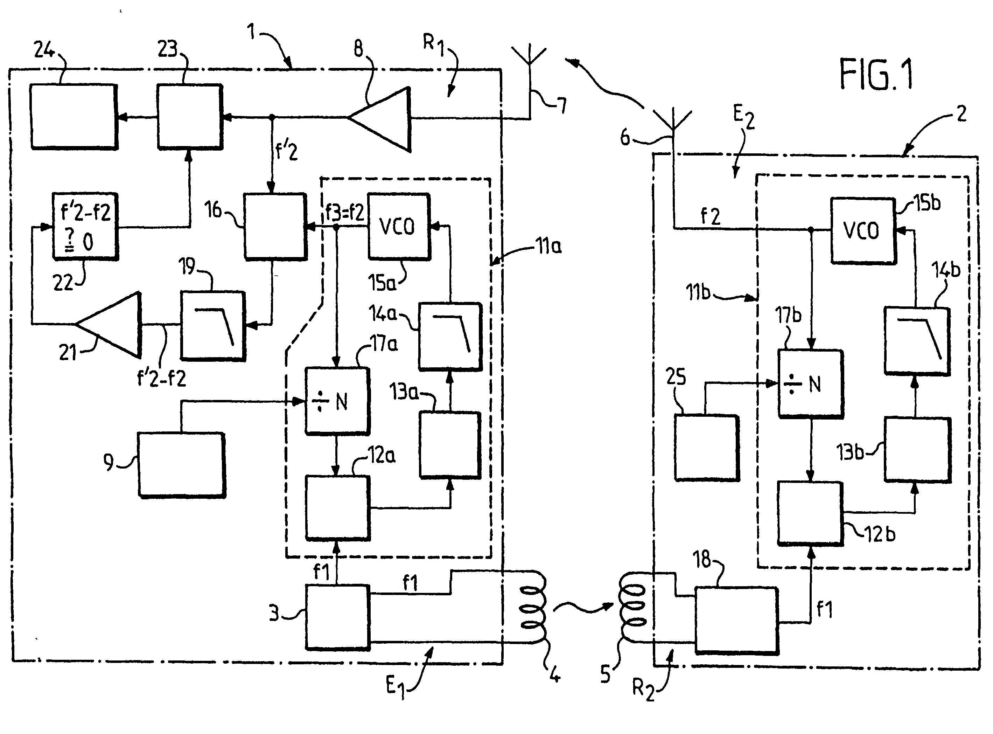

En se référant maintenant à la figure 1, on peut voir deux ensembles émetteurs-récepteurs 1 et 2 qui, dans une application particulière de la présente invention, peuvent faire partie d'un système d'accès du type dit "mains libres" permettant l'accès à un espace clos, en particulier à un véhicule automobile, et/ou l'exécution d'une fonction dans ledit espace clos, par exemple le démarrage du véhicule automobile. Dans une telle application, l'ensemble émetteur-récepteur 1 peut faire partie d'un dispositif de reconnaissance installé dans le véhicule automobile, tandis que l'ensemble émetteur-récepteur 2 peut être incorporé dans un organe d'identification, tel qu'un badge ou similaire, destiné à être porté par un utilisateur autorisé du véhicule automobile.

De façon classique, l'ensemble émetteur-récepteur 1 comprend un émetteur E₁ qui comporte un générateur de signal 3 produisant un signal à une première fréquence f₁, qui a par exemple une valeur de 125 kHz. Le générateur de signal 3 est relié à une antenne émettrice 4, par exemple une bobine, qui émet par induction magnétique le signal de fréquence f₁. Ce signal est reçu par l'antenne réceptrice 5, qui peut également être constituée par une bobine, du récepteur R₂ de l'ensemble émetteur 2. En réponse au signal de fréquence f₁, l'émetteur E₂ de l'ensemble émetteur-récepteur 2 engendre un signal ayant une seconde fréquence f₂ de 433,875 MHz, par exemple, qui est appliquée à une antenne émettrice 6 de l'ensemble émetteur-récepteur 2. Le signal de fréquence f₂ peut être modulé ou codé de façon à porter un code d'identification approprié propre à l'organe d'identification contenant l'ensemble émetteur-récepteur 2. Le signal de fréquence f₂ émis par l'antenne 6 est reçu par une antenne réceptrice 7 du récepteur R₁ de l'ensemble émetteur-récepteur 1.

Tout signal reçu par l'antenne 7 de l'ensemble émetteur-récepteur 1 est amplifié par un amplificateur 8 avant d'être démodulé ou décodé d'une manière qui sera décrite en détail plus loin à propos d'un exemple particulier de réalisation de l'invention, afin de déterminer si le signal reçu par l'antenne 7 porte un code correspondant à un code parmi plusieurs codes autorisés mémorisés dans une mémoire (non montrée) de l'unité centrale 9 du dispositif de reconnaissance dans lequel l'ensemble émetteur-récepteur 1 est incorporé. Si le code porté par le signal reçu par l'antenne 7 correspond à un code autorisé, le dispositif de reconnaissance autorise alors l'accès au véhicule automobile dans lequel il est installé, par exemple en commandant le déverrouillage des portes du véhicule, et/ou il autorise d'autres fonctions comme par exemple le démarrage du véhicule.

Toutefois, afin de détecter si les signaux de fréquence f₁ et f₂ ont été relayés ou non par des émetteurs-récepteurs pirates interposés dans la communication sans fil entre les antennes 4 et 5, d'une part, et les antennes 6 et 7 d'autre part, l'ensemble émetteur-récepteur 1 comprend en outre une boucle verrouillée en phase 11a, bien connue des hommes de l'art sous la désignation PLL, qui est ici agencée pour engendrer un signal de fréquence f₂ à partir du signal de fréquence f₁. A cet effet, le signal de fréquence f₁ engendré par le générateur de signal 3 est appliqué à l'une des deux entrées d'un détecteur de phase 12a, dont la sortie est reliée, à travers un intégrateur 13a et un filtre passe-bas 14a montés en série, à l'entrée de commande d'un oscillateur 15a commandé en tension, qui délivre en sortie un signal ayant une fréquence f₃. La sortie de l'oscillateur 15a est reliée, d'une part, à l'une des deux entrées d'un circuit mélangeur 16 et, d'autre part, à l'entrée d'un circuit diviseur de fréquence 17a dont la sortie est reliée à la seconde entrée du détecteur de phase 12a. Dans le cas où les fréquences f₁ et f₂ sont respectivement égales à 125 kHz et 433,875 MHz, le diviseur N du circuit diviseur 17a peut avoir une valeur égale à 3 471, de telle façon que la fréquence f₃ du signal produit par l'oscillateur 15a soit égale à la fréquence f₂.

De même, dans l'ensemble émetteur-récepteur 2, le signal de fréquence f₂ est produit à partir du signal de fréquence f₁ par une autre boucle verrouillée en phase 11b, qui est identique à la boucle 11a et qui, pour cette raison, ne sera pas décrite à nouveau en détail. On notera simplement que les circuits de la boucle 11b sont désignés par les mêmes numéros de référence affectés de la lettre b au lieu de la lettre a, et que le diviseur N du circuit diviseur 17b a la même valeur que celui du circuit diviseur 17a. Dans l'ensemble émetteur-récepteur 2, le signal de fréquence f₁ reçu par l'antenne réceptrice 5 et convenablement amplifié et remis en forme par un circuit de remise en forme 18 est appliqué à l'une des deux entrées du détecteur de phase 12b, et la sortie de l'oscillateur 15b commandé en tension, qui produit le signal de fréquence f₂, est reliée à l'antenne émettrice 6.

Tout signal reçu par l'antenne 7 de l'ensemble émetteur-récepteur 1, après amplification par l'amplificateur 8, est appliqué à l'autre entrée du mélangeur 16. En supposant que le signal reçu par l'antenne 7 ait une fréquence f'₂, le mélangeur 16 délivre sur sa sortie un signal de fréquence f'₂ + f₂, un signal de fréquence f'₂ - f₂, ainsi que, avec une plus faible amplitude, des signaux de fréquence f'₂ et f₂. La sortie du mélangeur 16 est reliée à un filtre passe-bas 19, qui délivre sur sa sortie le signal de battement, c'est-à-dire le signal de fréquence f'₂ - f₂. Ce signal de battement, après amplification par un amplificateur 21, est appliqué à l'entrée d'un circuit d'analyse 22. Ce circuit d'analyse 22 détermine si le signal de battement a une fréquence nulle ou une fréquence non nulle.

Si le circuit d'analyse 22 détermine que le signal de battement a une fréquence nulle, cela indique que le signal de fréquence f'₂ reçu par l'antenne 7 de l'ensemble émetteur-récepteur 1 a une fréquence rigoureusement identique à la fréquence f₂ du signal émis par l'antenne 6 de l'ensemble émetteur-récepteur 2 incorporée dans l'organe d'identification. Par contre, si le circuit d'analyse 22 détermine que le signal de battement a une fréquence non nulle, cela signifie que le signal reçu par l'antenne 7 a une fréquence différente de la fréquence f₂ du signal émis par l'antenne 6 de l'ensemble émetteur-récepteur 2. Comme déjà indiqué plus haut, si le signal émis par l'antenne 6 de l'ensemble émetteur-récepteur 2 a été relayé par un ou plusieurs ensembles émetteurs-récepteurs pirates, il aura nécessairement une fréquence qui n'est pas exactement égale à f₂. En conséquence, si le signal de battement a une fréquence non nulle (f'₂ différent de f₂) le signal reçu par l'antenne 7 ne doit pas être traité ou utilisé par le dispositif de reconnaissance dans lequel est incorporé l'ensemble émetteur-récepteur 1.

A cet effet, le signal sortant du préamplificateur 8 peut être envoyé à un circuit porte ou circuit d'acheminement sous condition 23, qui laisse passer ledit signal vers un circuit de traitement ou d'utilisation 24 seulement si le circuit porte reçoit un signal d'autorisation en provenance du circuit d'analyse 22, lorsque ce dernier détermine que le signal de battement a une fréquence nulle (f'₂ = f₂).

Afin de renforcer encore la sécurité contre un relayage des signaux de fréquence f₁ et f₂ par un ou plusieurs émetteurs-récepteurs pirates intercalés entre les deux émetteurs-récepteurs 1 et 2, on peut avantageusement faire varier en synchronisme et de façon identique la fréquence f₂ des signaux produits par les deux boucles verrouillées en phase 11a et 11b. Ceci peut être par exemple obtenu en faisant varier en synchronisme et de façon identique la valeur du diviseur N dans les circuits diviseurs 17a et 17b, selon une séquence aléatoire prédéfinie, qui est mémorisée dans les deux ensembles émetteurs-récepteurs let 2, par exemple dans la mémoire de l'unité centrale 9 susmentionnée du dispositif de reconnaissance incorporant l'ensemble émetteur-récepteur 1, et dans la mémoire d'une autre unité centrale 25 incluse dans l'organe d'identification incorporant l'ensemble émetteur-récepteur 2. Le démarrage de ladite séquence au même instant dans le circuit diviseur 17a de la boucle 11a et dans le circuit diviseur 17b de la boucle 11b peut être synchronisé par exemple au moyen d'un top de départ, qui est engendré par l'unité centrale 9 et superposé au signal de fréquence f₁ émis par l'antenne 4. La valeur du nombre N de départ dans la séquence aléatoire peut être préenregistrée dans la mémoire de chacune des deux unités centrales 9 et 25, ou un signal indicatif de ce nombre de départ peut être superposé au signal de fréquence f₁ et émis par l'antenne 4 avant l'émission dudit top de départ.

Dans ces conditions, les fréquences des signaux produits par les deux oscillateurs 15a et 15b vont varier en synchronisme et de manière identique. L'antenne 6 émet alors un signal modulé en fréquence conformément à la séquence aléatoire préenregistrée dans la mémoire de l'unité centrale 25. Cette séquence aléatoire peut servir de code d'identification pour permettre au dispositif de reconnaissance incorporant l'ensemble émetteur-récepteur 1 de reconnaître l'organe d'identification incorporant l'ensemble émetteur-récepteur 2.

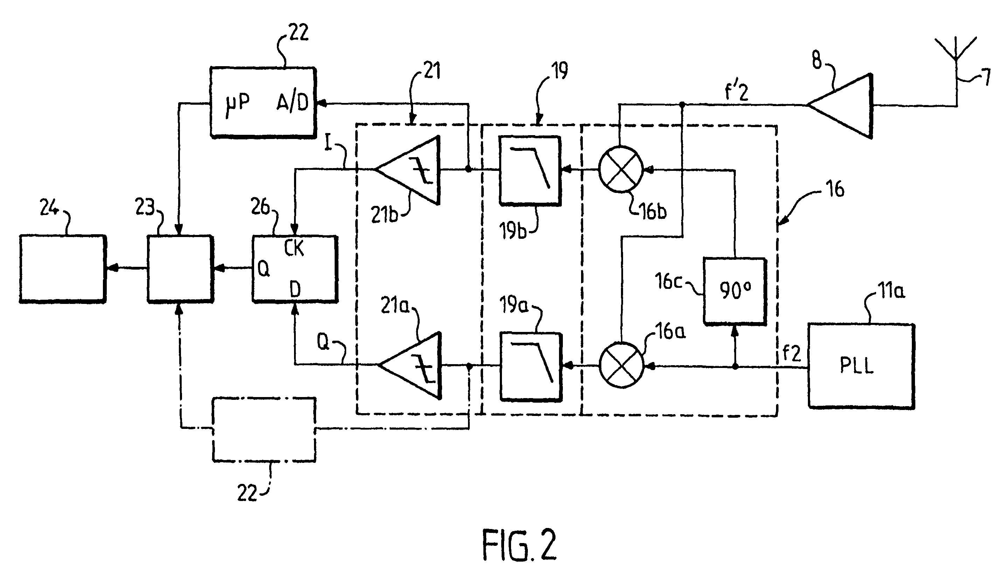

Dans le cas où le signal émis par l'antenne 6 est modulé en fréquence par une modulation du type FSK (modulation par décalage de fréquence), le circuit mélangeur 16, le filtre passe-bas 19 et l'amplificateur 21 peuvent servir à la fois pour détecter un éventuel relayage non autorisé du signal modulé en fréquence émis par l'antenne 6 de l'ensemble émetteur-récepteur 2 (f'₂ différent de f₂) et pour démoduler ledit signal modulé en fréquence comme on va maintenant le voir en se référant à la figure 2. Dans ce cas, le circuit mélangeur 16 peut être avantageusement constitué par un mélangeur double à quadrature. La sortie du préamplificateur 8 est alors reliée à l'une des deux entrées d'un premier mélangeur 16a et à l'une des deux entrées d'un second mélangeur 16b. La sortie de la boucle verrouillée en phase 11a est reliée directement à la seconde entrée du premier mélangeur 16a et à travers un déphaseur 16c à 90° à la seconde entrée du second mélangeur 16b. La sortie du premier mélangeur 16a est reliée, à travers un premier filtre passe-bas 19a et un premier circuit d'amplification et de mise en forme 21a, à une première sortie Q du double mélangeur 16. De même, la sortie du second mélangeur 16b est reliée, à travers un second filtre passe-bas 19b et un second circuit d'amplification et de mise en forme 21b, à une seconde sortie I du double mélangeur 16 (usuellement, un double mélangeur à quadrature inclut également les filtres passe-bas et les circuits d'amplification et de mise en forme associés à chaque voie du double mélangeur). La sortie Q du double mélangeur 16 est reliée à l'entrée de données D d'une bascule 26 de type D, tandis que la sortie I du double mélangeur 16 est reliée à l'entrée d'horloge CK de ladite bascule. La sortie Q de la bascule 26 est reliée à travers le circuit porte 23 au circuit de traitement ou d'utilisation 24.

Dans le cas où le circuit d'analyse 22, qui détermine si les fréquences f'₂ et f₂ sont égales ou différentes et qui commande en conséquence le circuit porte 23 de la manière indiquée plus haut, est constitué par un microprocesseur µP ayant une entrée avec convertisseur analogique/numérique, ladite entrée du microprocesseur peut être reliée soit à la sortie du filtre passe-bas 19b comme montré en traits pleins dans la figure 2, soit à la sortie du filtre passe-bas 19a comme montré en traits mixtes dans la figure 2. Si le microprocesseur µP ne possède pas d'entrée avec convertisseur analogique/numérique, il peut être relié soit à la sortie I, soit à la sortie Q du double mélangeur 16.

Avec l'arrangement représenté sur la figure 2, les données portées par le signal modulé en fréquence reçu par l'antenne 7 sont récupérées sur la sortie Q de la bascule 26. Si le circuit d'analyse 22 détermine que les fréquences f'₂ et f₂ sont égales (f₂ étant alors la fréquence centrale de la modulation FSK), le circuit d'analyse commande alors le circuit porte 23 pour qu'il laisse passer les données présentes sur la sortie Q de la bascule 26 vers le circuit d'utilisation ou de traitement 24. Dans le cas contraire, le circuit d'analyse 22 commande le circuit porte 23 de telle façon qu'il ne laisse pas passer les données vers le circuit de traitement ou d'utilisation 24.

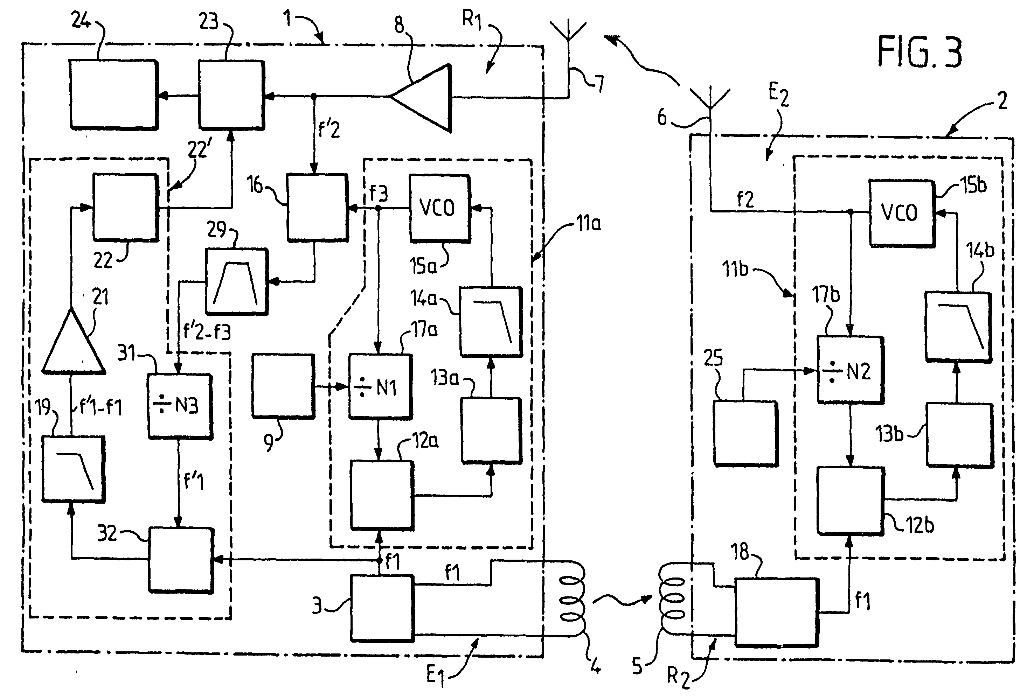

On va maintenant décrire un second mode de réalisation de l'invention en faisant référence à la figure 3. Dans la figure 3, les éléments qui sont identiques ou qui jouent le même rôle que ceux du premier mode de réalisation de la figure 1, sont désignés par les mêmes numéros de référence et ne seront donc pas décrits à nouveau en détail.

Le mode de réalisation de la figure 3 diffère de celui de la figure 1 en ce que les diviseurs de fréquence 17a et 17b des boucles verrouillées en phase 11a et 11b divisent la fréquence des signaux produits respectivement par les oscillateurs 15a et 15b respectivement par des nombres N1 et N2 qui ont des valeurs différentes, de telle sorte que lesdits signaux ont des fréquences f₃ et f₂ qui ont elles-mêmes des valeurs différentes. Par exemple, N1 est égal à 3385 et N2 est égal à 3471, de sorte que si f₁ est égale à 125 kHz, f₃ est égale à 423,125 MHz et f₂ est égale à 433,875 MHz.

Le second mode de réalisation de la figure 3 diffère en outre de celui de la figure 1 en ce que la sortie du mélangeur 16 est reliée à l'entrée d'un filtre passe-bande 29 qui délivre sur sa sortie un signal ayant une fréquence égale à la différence des fréquences f'₂ et f₃ des signaux appliqués aux deux entrées du mélangeur 16. La sortie du filtre passe-bande 29 est reliée au circuit d'analyse 22' qui est ici constitué par un autre diviseur de fréquence 31, par un autre mélangeur 32, par le filtre passe-bas 19, par l'amplificateur 21 et par le circuit 22, ces trois derniers éléments étant identiques à ceux du premier mode de réalisation de la figure 1.

Le diviseur de fréquence 31 divise la fréquence (f'₂ - f₃) du signal issu du filtre passe-bande 29 par un nombre entier N3 qui est égal à la valeur absolue de la différence des nombres diviseurs N1 et N2 des diviseurs 17a et 17b, de telle sorte que le signal issu du diviseur de fréquence 31 ait une fréquence f'₁ qui, normalement, doit être égale à la fréquence f₁ du signal produit par le générateur 3. Dans le cas où N1 et N2 ont les valeurs indiquées plus haut, N3 est égal à 86.

Le mélangeur 32 reçoit sur ses deux entrées respectivement le signal de fréquence f'₁ issu du diviseur de fréquence 31 et le signal de fréquence f₁ issu du générateur 3, et le filtre passe-bas 19, qui est relié à la sortie du mélangeur 32, délivre sur sa sortie un signal de battement ayant une fréquence f'₁ - f₁.

Si le signal reçu par l'antenne 7 du récepteur R₁ est le signal à fréquence f₂ émis par l'antenne 6 de l'émetteur E₂, c'est-à-dire en l'absence de relayage de signaux par des émetteurs-récepteurs pirates, le mélangeur 16 reçoit un signal de fréquence f'₂ = f₂ et un signal de fréquence f₃, le signal issu du filtre passe-bande 29 a une fréquence f₂ - f₃ (433,875 MHz - 423,125 MHz = 10,75 MHz), et le signal issu du diviseur de fréquence 31 a une fréquence f'₁ = (f₂ - f₃)/N3, soit 10,75 MHz/86 = 125 kHz, qui est rigoureusement égale à la fréquence f₁ du signal produit par le générateur 3. En conséquence, le signal de battement issu du filtre passe-bas 19 a une fréquence nulle, ce qui est détecté par le circuit 22 qui autorise le circuit porte 23 à laisser passer le signal de fréquence f₂ reçu par le récepteur R₁ vers le circuit de traitement ou d'utilisation 24.

Par contre, si le signal de fréquence f₂ émis par l'antenne 6 de l'émetteur E₂ a été relayé par des émetteurs-récepteurs pirates, le signal reçu par le récepteur R₁ a une fréquence f'₂ différente de f₂. Le signal de fréquence f'₂ - f₃ issu du filtre passe-bande 29 a une fréquence différente de 10,75 MHz et, après division de sa fréquence par 86 (N3) dans le diviseur de fréquence 31, le signal obtenu a une fréquence f'₁ différente de f₁. Le signal de battement issu du filtre passe-bas 19 a donc une fréquence f'₁ - f₁ qui n'est pas nulle et ceci est détecté par le circuit 22 qui inhibe le circuit porte 23 afin qu'il ne laisse pas passer le signal reçu par le récepteur R₁ vers le circuit de traitement ou d'utilisation 24.

Il va de soi que le mode de réalisation de l'invention qui a été décrit ci-dessus a été donné à titre d'exemple purement indicatif et nullement limitatif, et que de nombreuses modifications peuvent être facilement apportées par l'homme de l'art sans pour autant sortir du cadre de l'invention. C'est ainsi notamment que, bien que le circuit d'analyse 22, le circuit porte 23 et le circuit de traitement 24 soient représentés sous la forme de blocs discrets, les fonctions réalisées par ces circuits pourraient être exécutées par le processeur de l'unité centrale 9.

En outre, dans le mode de réalisation représenté sur la figure 3, le diviseur de fréquence 31 pourrait être supprimé, la sortie du filtre passe-bande 29 étant alors reliée directement à l'entrée correspondante du mélangeur 32 et l'autre entrée du mélangeur 32 étant reliée à la sortie d'un multiplicateur de fréquence qui multiplie par N3 la fréquence f₁ du signal produit par le générateur 3.

## Revendications

1. Procédé de transmission bidirectionnelle, sans fil, de données entre deux ensembles émetteurs-récepteurs, l'émetteur d'un premier des deux ensembles engendrant un premier signal à une première fréquence (f₁), qui est émis vers le récepteur du second des deux ensembles, et l'émetteur du second des deux ensembles engendrant un second signal à une seconde fréquence (f₂), qui est émis vers le récepteur du premier ensemble, **caractérisé en ce qu'**il consiste :
a) du côté du premier ensemble, à engendrer à partir dudit premier signal à la première fréquence (f₁), au moyen d'une première boucle verrouillée en phase, un troisième signal ayant une troisième fréquence (f₃) qui est égale à la première fréquence (f₁) multipliée par un premier nombre (N1) ;
b) du côté du second ensemble, à engendrer ledit second signal à partir du premier signal reçu par ledit second ensemble, au moyen d'une seconde boucle verrouillée en phase, de telle façon que la seconde fréquence (f₂) du second signal soit égale à la première fréquence (f₁) multipliée par un second nombre (N2) ;
c) du côté du premier ensemble :
c1) à mélanger un signal reçu par ce premier ensemble avec le troisième signal engendré par la première boucle verrouillée en phase, afin d'obtenir un signal de mélange ;
c2) à filtrer le signal de mélange afin d'obtenir un signal filtré ayant une fréquence correspondant à la différence entre la fréquence du signal reçu par le premier ensemble et la troisième fréquence (f₃) du troisième signal ;
c3) à analyser ledit signal filtré pour déterminer s'il a une fréquence prédéterminée qui est égale à la première fréquence (f₁) multipliée par un nombre entier (N3), positif ou nul, égal à la valeur absolue de la différence (|N2 - N1|) des premier et second nombres (N1 et N2), et qui indique que le signal reçu par le premier ensemble est le second signal à la seconde fréquence (f₂) émis par le second ensemble, ou s'il a une fréquence qui est différente de ladite fréquence prédéterminée et qui indique que ledit signal reçu par le premier ensemble est un signal parasite non autorisé ;
c4) à autoriser un traitement ou une utilisation dudit signal reçu par le premier ensemble seulement si le résultat de l'analyse indique que le signal filtré a une fréquence égale à ladite fréquence prédéterminée.

2. Procédé selon la revendication 1, **caractérisé en ce que** les premier et second nombres (N1 et N2) ont la même valeur (N), de telle sorte que les seconde et troisième fréquences (f₂ et f₃) aient des valeurs égales, ladite fréquence prédéterminée ayant une valeur nulle, et **en ce que** l'analyse du signal filtré (étape c3) consiste à déterminer si le signal filtré a une fréquence nulle indiquant que le signal reçu par le premier ensemble est le second signal émis par le second ensemble, ou s'il a une fréquence non nulle indiquant que ledit signal reçu par le premier ensemble est un signal parasite non autorisé.

3. Procédé selon la revendication 2, **caractérisé en ce qu'**il consiste en outre à faire varier en synchronisme et de façon identique la seconde fréquence des second et troisième signaux selon une séquence aléatoire prédéfinie mémorisée dans les premier et second ensembles.

4. Procédé selon la revendication 1, **caractérisé en ce que** les premier et second nombres (N1 et N2) ont des valeurs différentes, de telle sorte que les seconde et troisième fréquences (f₂ et f₃) aient des valeurs différentes, et **en ce que** l'analyse du signal filtré (étape c3) consiste :
c3.1) à diviser la fréquence du signal filtré par ledit nombre entier (N3) de façon à obtenir un quatrième signal ;
c3.2) à mélanger le quatrième signal avec le premier signal engendré par l'émetteur du premier ensemble afin d'obtenir un autre signal de mélange ;
c3.3) à filtrer ledit autre signal de mélange afin d'obtenir un signal de battement ayant une fréquence correspondant à la différence entre la fréquence du quatrième signal et la première fréquence (f₁) dudit premier signal ; et
c3.4) à analyser ledit signal de battement pour déterminer s'il a une fréquence nulle indiquant que le signal reçu par le premier ensemble est le second signal émis par le second ensemble, ou s'il a une fréquence non nulle indiquant que ledit signal reçu par le premier ensemble est un signal parasite non autorisé.

5. Procédé selon l'une quelconque des revendications 1 à 4, pour la transmission bidirectionnelle sécurisée de données, sans fil, dans un système d'accès du type dit "mains libres", qui permet l'accès à un espace clos, en particulier à un véhicule automobile, et/ou l'exécution d'une fonction dans ledit espace clos, par exemple le démarrage du véhicule automobile, et dans lequel un échange à distance de données est établi entre un dispositif de reconnaissance installé dans l'espace clos et un organe d'identification destiné à être porté par un utilisateur, l'accès à l'espace clos et/ou l'exécution de ladite fonction n'étant autorisé que lorsque le dispositif de reconnaissance a authentifié l'organe d'identification, **caractérisé en ce qu'**il consiste à engendrer lesdits premier et troisième signaux du côté du dispositif de reconnaissance et ledit second signal du côté de l'organe d'identification, et à autoriser le traitement dudit signal reçu par le dispositif de reconnaissance pour l'authentification de l'organe d'identification seulement si le résultat de ladite analyse indique que ledit signal filtré a une fréquence égale à ladite fréquence prédéterminée.

6. Système de transmission bidirectionnelle de données pour la mise en oeuvre du procédé selon l'une quelconque des revendications 1 à 5, comprenant deux ensembles émetteurs-récepteurs (1 et 2), l'émetteur (E₁) d'un premier des deux ensembles comportant un premier générateur de signal (3) qui engendre un premier signal à une première fréquence (f₁) et qui est relié à une première antenne (4) émettant ledit premier signal vers le récepteur (R₂) du second des deux ensembles, et l'émetteur (E₂) du second des deux ensembles comportant un second générateur de signal (11b) qui engendre un second signal à une seconde fréquence (f₂) et qui est relié à une seconde antenne (6) émettant ledit second signal vers le récepteur (R₁) du premier ensemble, **caractérisé en ce que** :
a) le premier ensemble (1) comprend en outre une première boucle verrouillée en phase (11a), dont l'entrée est reliée au premier générateur de signal (3) pour recevoir ledit premier signal à la première fréquence (f₁) à titre de signal de référence, et qui délivre en sortie un troisième signal ayant une troisième fréquence (f₃) qui est égale à la première fréquence (f₁) multipliée par un premier nombre (N1) ;
b) le second générateur de signal (11b) du second ensemble (2) est constitué par une seconde boucle verrouillée en phase, dont l'entrée est reliée au récepteur (R₂) dudit second ensemble pour recevoir, à titre de signal de référence, ledit premier signal (f₁) émis par ladite première antenne (4), et dont la sortie est reliée à ladite seconde antenne (6) pour émettre ledit second signal à la seconde fréquence (f₂), la seconde boucle (11b) étant conçue de telle façon que ladite seconde fréquence (f₂) du second signal soit égale à la première fréquence (f₁) multipliée par un second nombre (N2) ;
c) le premier ensemble (1) comprend en outre un mélangeur (16) ayant une première entrée reliée au récepteur (R₁) dudit premier ensemble (1), une seconde entrée reliée à la première boucle (11a) pour recevoir ledit troisième signal, et une sortie délivrant un signal de mélange, un filtre (19 ; 29) ayant une entrée reliée à la sortie du mélangeur et une sortie délivrant un signal filtré ayant une fréquence correspondant à la différence entre les fréquences des signaux appliqués aux première et seconde entrées du mélangeur, un circuit d'analyse (22 ; 22') qui est relié à la sortie du filtre (19 ; 29) et qui détermine si le signal filtré a une fréquence prédéterminée qui est égale à la première fréquence (f₁) multipliée par un nombre entier (N3), positif ou nul, égal à la valeur absolue de la différence (|N2 - N1|) des premier et second nombres (N1 et N2), et un circuit porte (23) qui est relié au circuit d'analyse (22) et au récepteur (R₁) dudit premier ensemble et qui laisse passer ledit signal reçu par le récepteur du premier ensemble, vers un circuit (24) de traitement ou d'utilisation dudit signal reçu, seulement si ledit circuit d'analyse a déterminé que ledit signal filtré a ladite fréquence prédéterminée.

7. Système selon la revendication 6, **caractérisé en ce que** chacune des première et seconde boucles verrouillées en phase (11a et 11b) comprend un détecteur de phase (12a, 12b) qui reçoit sur une première entrée ledit premier signal à la première fréquence (f₁), et dont la sortie est reliée, à travers un circuit intégrateur (13a, 13b) et un filtre passe-bas (14a, 14b) montés en série, à l'entrée de commande d'un oscillateur commandé en tension (15a, 15b), dont la sortie est reliée à travers un diviseur de fréquence (17a, 17b) à une seconde entrée dudit détecteur de phase, la sortie de l'oscillateur commandé en tension (15a) de la première boucle (11a) délivrant ledit troisième signal à la troisième fréquence (f₃) et la sortie de l'oscillateur commandé en tension (15b) de la seconde boucle (11b) délivrant ledit second signal, à la seconde fréquence (f₂), le diviseur de fréquence (17a) de la première boucle verrouillée en phase (11a) divisant la fréquence par ledit premier nombre (N1) et le diviseur de fréquence (17b) de la seconde boucle verrouillée en phase (11b) divisant la fréquence par ledit second nombre (N2).

8. Système selon la revendication 7, **caractérisé en ce que** les premier et second nombres (N1 et N2) ont la même valeur (N), de telle sorte que les seconde et troisième fréquences (f₂ et f₃) aient des valeurs égales, ladite fréquence prédéterminée ayant une valeur nulle, **en ce que** ledit filtre (19) est un filtre passe-bas délivrant sur sa sortie un signal de battement entre le signal reçu par le récepteur (R₁) du premier ensemble émetteur-récepteur (1) et ledit troisième signal à la troisième fréquence (f₃), et **en ce que** ledit circuit d'analyse (22) détermine si ledit signal de battement a une fréquence nulle indiquant que le signal reçu par le récepteur (R₁) du premier ensemble émetteur-récepteur (1) est ledit second signal à la seconde fréquence (f₂), ou s'il a une fréquence non nulle indiquant que ledit signal reçu par ledit premier ensemble est un signal parasite non autorisé.

9. Système selon la revendication 8, **caractérisé en ce que** chacun des premier et second ensembles (1 et 2) comprend un moyen (9, 25) pour mémoriser une séquence aléatoire prédéfinie de valeurs et pour faire varier ladite valeur (N) des premier et second nombres (N1 et N2) dans le diviseur de fréquence respectif (17a ou 17b) de chacune des première et seconde boucles verrouillées en phase (11a, 11b) conformément à ladite séquence aléatoire prédéfinie, en synchronisme et de façon identique pour les deux boucles.

10. Système selon la revendication 9, **caractérisé en ce que** ledit mélangeur (16) est un mélangeur double à quadrature comprenant un premier et un second mélangeur (16a, 16b) qui ont chacun une première entrée reliée à la sortie du récepteur (R₁) dudit premier ensemble émetteur-récepteur (1) et une seconde entrée qui est reliée à la sortie de la première boucle verrouillée en phase (11a), directement pour le premier mélangeur (16a) et à travers un déphaseur (16c) à 90° pour le second mélangeur (16b), la sortie du premier mélangeur étant reliée à travers un premier circuit passe-bas (19a) à une première sortie (Q) du double mélangeur à quadrature et la sortie du second mélangeur étant reliée à travers un second circuit passe-bas (19b) à une seconde sortie (I) dudit mélangeur double à quadrature.

11. Système selon la revendication 10, **caractérisé en ce que** l'une des première et seconde sorties (Q et I) du mélangeur double à quadrature (16) est reliée à l'entrée de données (D) d'une bascule (26) de type D, l'autre des première et seconde sorties du mélangeur double à quadrature est reliée à l'entrée d'horloge (CK) de ladite bascule, et la sortie (Q) de ladite bascule est reliée audit circuit (24) de traitement ou d'utilisation à travers ledit circuit porte (23) sous la commande dudit circuit d'analyse (22).

12. Système selon la revendication 11, **caractérisé en ce que** ledit circuit d'analyse (22) est relié à la sortie de l'un des premier et second filtres passe-bas (19a et 19b) du double mélangeur à quadrature (16).

13. Système selon la revendication 7, **caractérisé en ce que** les premier et second nombres (N1 et N2) ont des valeurs différentes, de telle sorte que les seconde et troisième fréquences (f₂ et f₃) ont des valeurs différentes, **en ce que** ledit filtre (29) est un filtre passe-bande, et **en ce que** ledit circuit d'analyse (22') comprend :
a) un autre diviseur de fréquence (31) ayant une entrée reliée à la sortie dudit filtre passe-bande (29) et une sortie délivrant un quatrième signal ayant une fréquence qui est égale au quotient de la fréquence du signal filtré sortant du filtre passe-bande (29) par ledit nombre entier (N3 = |N2 - N1|) ;
b) un autre mélangeur (32) ayant une première entrée reliée à la sortie dudit autre diviseur de fréquence (31) pour recevoir ledit quatrième signal, une seconde entrée reliée au premier générateur de signal (3) dudit premier ensemble émetteur-récepteur (1) pour recevoir ledit premier signal à la première fréquence (f₁), et une sortie délivrant un autre signal de mélange ;
c) un filtre passe-bas (19) ayant une entrée reliée à la sortie de l'autre mélangeur (32) et une sortie délivrant un signal de battement entre lesdits quatrième et premier signaux ;
d) et un circuit (22) qui est relié à la sortie du filtre passe-bas (19) et qui détermine si ledit signal de battement a une fréquence nulle indiquant que le signal reçu par le récepteur (R₁) du premier ensemble émetteur-récepteur (1) est ledit second signal à la seconde fréquence (f₂), ou s'il a une fréquence non nulle indiquant que ledit signal reçu par ledit premier ensemble est un signal parasite non autorisé.

14. Système selon l'une quelconque des revendications 6 à 13, utilisable dans un système d'accès du type dit "mains libres" qui permet l'accès à un espace clos, en particulier à un véhicule automobile, et/ou l'exécution d'une fonction dans ledit espace clos, par exemple le démarrage du véhicule automobile, et qui comprend un dispositif de reconnaissance installé dans l'espace clos et un organe d'identification destiné à être porté par un utilisateur, l'accès à l'espace clos et/ou l'exécution de ladite fonction n'étant autorisé que lorsque le dispositif de reconnaissance a authentifié l'organe d'identification, **caractérisé en ce que** ledit premier ensemble émetteur-récepteur (1), y compris la première boucle verrouillée en phase (11a), le mélangeur (16), le filtre (19 ; 29), le circuit d'analyse (22 ; 22') et le circuit porte (23), sont installés dans le dispositif de reconnaissance, tandis que ledit second ensemble émetteur-récepteur (2), y compris la seconde boucle verrouillée en phase (11b), sont installés dans ledit dispositif d'identification.

## Patentansprüche

1. Verfahren zur drahtlosen bidirektionalen Übertragung von Daten zwischen zwei Sender/Empfänger-Einheiten, wobei der Sender einer Ersten der zwei Einheiten ein erstes Signal mit einer ersten Frequenz (f₁) erzeugt, das zum Empfänger der Zweiten der zwei Einheiten ausgesendet wird, und der Sender der Zweiten der zwei Einheiten ein zweites Signal mit einer zweiten Frequenz (f₂) erzeugt, das zum Empfänger der ersten Einheit ausgesendet wird, **dadurch gekennzeichnet, dass** es darin besteht:
a) auf Seiten der ersten Einheit anhand des ersten Signals mit der ersten Frequenz (f₁) mittels einer ersten Phasenverriegelungsschleife ein drittes Signal zu erzeugen, das eine dritte Frequenz (f₃) besitzt, die gleich der ersten Frequenz (f₁), multipliziert mit einer ersten Zahl (N1), ist;
b) auf Seiten der zweiten Einheit anhand des ersten Signals, das durch die zweite Einheit empfangen wird, mittels einer zweiten Phasenverriegelungsschleife das zweite Signal zu erzeugen, derart, dass die zweite Frequenz (f₂) des zweiten Signals gleich der ersten Frequenz (f₁), multipliziert mit einer zweiten Zahl (N2), ist;
c) auf Seiten der ersten Einheit:
c1) ein durch diese erste Einheit empfangenes Signal mit dem dritten Signal, das durch die erste Phasenverriegelungsschleife erzeugt wird, zu mischen, um ein Mischsignal zu erhalten;
c2) das Mischsignal zu filtern, um ein gefiltertes Signal zu erhalten, das eine Frequenz besitzt, die der Differenz zwischen der Frequenz des durch die erste Einheit empfangenen Signals und der dritten Frequenz (f₃) des dritten Signals entspricht;
c3) dieses gefilterte Signal zu analysieren, um festzustellen, ob es eine vorgegebene Frequenz hat, die gleich der ersten Frequenz (f₁), multipliziert mit einer ganzen Zahl (N3) größer oder gleich null, die gleich dem Absolutwert der Differenz (|N2 - N1|) der ersten und der zweiten Zahl (N1 und N2) ist, ist, was angibt, dass das durch die erste Einheit empfangene Signal das durch die zweite Einheit ausgesendete zweite Signal mit der zweiten Frequenz (f₂) ist, oder ob es eine Frequenz hat, die von der vorgegebenen Frequenz verschieden ist, was angibt, dass das durch die erste Einheit empfangene Signal ein unzulässiges parasitäres Signal ist; und
c4) eine Verarbeitung oder Verwendung des durch die erste Einheit empfangenen Signals nur zuzulassen, wenn das Ergebnis der Analyse angibt, dass das gefilterte Signal eine Frequenz hat, die gleich der vorgegebenen Frequenz ist.

2. Verfahren nach Anspruch 1, **dadurch gekennzeichnet, dass** die erste und die zweite Zahl (N1 und N2) den gleichen Wert (N) haben, derart, dass die zweite und die dritte Frequenz (f₂ und f₃) gleiche Werte besitzen, wobei die vorgegebene Frequenz einen Wert null hat, und dass die Analyse des gefilterten Signals (Schritt c3) darin besteht, festzustellen, ob das gefilterte Signal eine Frequenz null hat, was angibt, dass das durch die erste Einheit empfangene Signal das durch die zweite Einheit ausgesendete zweite Signal ist, oder ob es eine von null verschiedene Frequenz hat, was angibt, dass das durch die erste Einheit empfangene Signal ein unzulässiges parasitäres Signal ist.

3. Verfahren nach Anspruch 2, **dadurch gekennzeichnet, dass** es außerdem darin besteht, die zweite Frequenz des zweiten und des dritten Signals in Übereinstimmung mit einer in der ersten und m der zweiten Einheit gespeicherten, im Voraus definierten Zufallsfolge synchron und identisch zu variieren.

4. Verfahren nach Anspruch 1, **dadurch gekennzeichnet, dass** die erste und die zweite Zahl (N1 und N2) verschiedene Werte haben, derart, dass die zweite und die dritte Frequenz (f₂ und f₃) verschiedene Werte besitzen, und dass die Analyse des gefilterten Signals (Schritt c3) darin besteht:
c3.1) die Frequenz des gefilterten Signals durch die ganze Zahl (N3) zu dividieren, um ein viertes Signal zu erhalten;
c3.2) das vierte Signal mit dem durch den Sender der ersten Einheit erzeugten ersten Signal zu mischen, um ein weiteres Mischsignal zu erhalten;
c3.3) das weitere Mischsignal zu filtern, um ein Schwebungssignal zu erhalten, das eine Frequenz hat, die der Differenz zwischen der Frequenz des vierten Signals und der ersten Frequenz (f₁) des ersten Signals entspricht; und
c3.4) das Schwebungssignal zu analysieren, um festzustellen, ob es eine Frequenz null hat, was angibt, dass das durch die erste Einheit empfangene Signal das durch die zweite Einheit ausgesendete zweite Signal ist, oder ob es eine von null verschiedene Frequenz hat, was angibt, dass das durch die erste Einheit empfangene Signal ein unzulässiges parasitäres Signal ist.

5. Verfahren nach einem der Ansprüche 1 bis 4 für die drahtlose, gesicherte bidirektionale Übertragung von Daten in einem Zugangssystem des sogenannten "Freihand"-Typs, das den Zugang zu einem geschlossenen Raum, insbesondere zu einem Kraftfahrzeug, und die Ausführung einer Funktion in dem geschlossenen Raum, beispielsweise das Starten des Kraftfahrzeugs, ermöglicht und in dem ein Ferndatenaustausch zwischen einer in dem geschlossenen Raum installierten Erkennungsvorrichtung und einem Identifizierungsorgan, das dazu vorgesehen ist, von einem Anwender getragen zu werden, aufgebaut wird, wobei der Zugang zu dem geschlossenen Raum und/oder die Ausführung der Funktion nur zugelassen wird, wenn die Erkennungsvorrichtung das Identifizierungsorgan als berechtigt erkannt hat, **dadurch gekennzeichnet, dass** es darin besteht, das erste und das dritte Signal auf Seiten der Erkennungsvorrichtung und das zweite Signal auf Seiten des Identifizierungsorgans zu erzeugen und die Verarbeitung des durch die Erkennungsvorrichtung empfangenen Signals für die Authentifizierung des Identifizierungsorgans nur zuzulassen, wenn das Ergebnis der Analyse angibt, dass das gefilterte Signal eine Frequenz hat, die gleich der vorgegebenen Frequenz ist.

6. System zur bidirektionalen Übertragung von Daten für die Ausführung des Verfahrens nach einem der Ansprüche 1 bis 5, das zwei Sender/Empfänger-Einheiten (1 und 2) umfasst, wobei der Sender (E₁) einer Ersten der zwei Einheiten einen ersten Signalgenerator (3) umfasst, der ein erstes Signal mit einer ersten Frequenz (f₁) erzeugt und mit einer ersten Antenne (4) verbunden ist, die das erste Signal zu dem Empfänger (R₂) der Zweiten der zwei Einheiten aussendet, und wobei der Sender (E₂) der Zweiten der zwei Einheiten einen zweiten Signalgenerator (11b) umfasst, der ein zweites Signal mit einer zweiten Frequenz (f₂) erzeugt und mit einer zweiten Antenne (6) verbunden ist, die das zweite Signal zum Empfänger (R₁) der ersten Einheit aussendet, **dadurch gekennzeichnet, dass**:
a) die erste Einheit (1) außerdem eine erste Phasenverriegelungsschleife (11a) umfasst, deren Eingang mit dem ersten Signalgenerator (3) verbunden ist, um das erste Signal mit der ersten Frequenz (f₁) als Referenzsignal zu empfangen, und die am Ausgang ein drittes Signal liefert, das eine dritte Frequenz (f₃) besitzt, die gleich der ersten Frequenz (f₁), multipliziert mit einer ersten Zahl (N1), ist;
b) der zweite Signalgenerator (11b) der zweiten Einheit (2) durch eine zweite Phasenverriegelungsschleife gebildet ist, deren Eingang mit dem Empfänger (R₂) der zweiten Einheit verbunden ist, um als Referenzsignal das erste Signal (f₁) zu empfangen, das durch die erste Antenne (4) ausgesendet wird, und deren Ausgang mit der zweiten Antenne (6) verbunden ist, um das zweite Signal mit der zweiten Frequenz (f₂) auszusenden, wobei die zweite Schleife (11b) so beschaffen ist, dass die zweite Frequenz (f₂) des zweiten Signals gleich der ersten Frequenz (f₁), multipliziert mit einer zweiten Zahl (N2), ist;
c) die erste Einheit (1) außerdem umfasst: einen Mischer (16), der einen ersten Eingang, der mit dem Empfänger (R₁) der ersten Einheit (1) verbunden ist, einen zweiten Eingang, der mit der ersten Schleife (11a) verbunden ist, um das dritte Signal zu empfangen, und einen Ausgang, der ein Mischsignal liefert, besitzt, ein Filter (19; 29), das einen Eingang, der mit dem Ausgang des Mischers verbunden ist, und einen Ausgang, der ein gefiltertes Signal liefert, das eine der Differenz zwischen den Frequenzen der in den ersten und in den zweiten Eingang des Mischers eingegebenen Signale entspricht, besitzt, eine Analyseschaltung (22; 22'), die mit dem Ausgang des Filters (19; 29) verbunden ist und feststellt, ob das gefilterte Signal eine vorgegebene Frequenz hat, die gleich der ersten Frequenz (f₁), multipliziert mit einer ganzen Zahl (N3) größer oder gleich null, die gleich dem Absolutwert der Differenz (|N2 - N1|) der ersten und der zweiten Zahl (N1 und N2) ist, ist, und eine Gatterschaltung (23), die mit der Analyseschaltung (22) und mit dem Empfänger (R₁) der ersten Einheit verbunden ist und das durch den Empfänger der ersten Einheit empfangene Signal zu einer Schaltung (24) für die Verarbeitung oder Verwendung des empfangenen Signals nur durchlässt, wenn die Analyseschaltung festgestellt hat, dass das gefilterte Signal die vorgegebene Frequenz hat.

7. System nach Anspruch 6, **dadurch gekennzeichnet, dass** sowohl die erste als auch die zweite Phasenverriegelungsschleife (11a und 11b) einen Phasendetektor (12a, 12b) umfasst, der an einem ersten Eingang das erste Signal mit der ersten Frequenz (f₁) empfängt und dessen Ausgang über eine Integratorschaltung (13a, 13b) und ein Tiefpassfilter (14a, 14b), die in Reihe geschaltet sind, mit dem Steuereingang eines spannungsgesteuerten Oszillators (15a, 15b) verbunden ist, dessen Ausgang über einen Frequenzteiler (17a, 17b) mit einem zweiten Eingang des Phasendetektors verbunden ist, wobei der Ausgang des spannungsgesteuerten Oszillators (15a) der ersten Schleife (11a) das dritte Signal mit der dritten Frequenz (f₃) liefert und der Ausgang des spannungsgesteuerten Oszillators (15b) der zweiten Schleife (11b) das zweite Signal mit der zweiten Frequenz (f₂) liefert, wobei der Frequenzteiler (17a) der ersten Phasenverriegelungsschleife (11a) die Frequenz durch die erste Zahl (N1) teilt und der Frequenzteiler (17b) der zweiten Phasenverriegelungsschleife (11b) die Frequenz durch die zweite Zahl (N2) teilt.

8. System nach Anspruch 7, **dadurch gekennzeichnet, dass** die erste und die zweite Zahl (N1 und N2) den gleichen Wert (N) haben, derart, dass die zweite und die dritte Frequenz (f₂ und f₃) gleiche Werte besitzen, wobei die vorgegebene Frequenz einen Wert null hat, dass das Filter (19) ein Tiefpassfilter ist, das an seinem Ausgang ein Schwebungssignal zwischen den vom Empfänger (R₁) der ersten Sender/Empfänger-Einheit (1) empfangenen Signal und dem dritten Signal mit der dritten Frequenz (f₃) liefert, und dass die Analyseschaltung (22) feststellt, ob das Schwebungssignal eine Frequenz null hat, was angibt, dass das vom Empfänger (R₁) der ersten Sender/Empfänger-Einheit (1) empfangene Signal das zweite Signal mit der Frequenz (f₂) ist, oder ob es eine von null verschiedene Frequenz hat, was angibt, dass das durch die erste Einheit empfangene Signal ein unzulässiges parasitäres Signal ist.

9. System nach Anspruch 8, **dadurch gekennzeichnet, dass** sowohl die erste als auch die zweite Einheit (1 und 2) ein Mittel (9, 25) umfasst, um eine im Voraus definierte Zufallsfolge von Werten zu speichern und um den Wert (N) der ersten und der zweiten Zahl (N1 und N2) im entsprechenden Frequenzteiler (17a oder 17b) sowohl der ersten als auch der zweiten Phasenverriegelungsschleife (11a, 11b) in Übereinstimmung mit der im Voraus definierten Zufallsfolge synchron und identisch für die beiden Schleifen zu variieren.

10. System nach Anspruch 9, **dadurch gekennzeichnet, dass** der Mischer (16) ein Quadratur-Doppelmischer ist, der einen ersten und einen zweiten Mischer (16a, 16b) umfasst, die jeweils mit einem ersten Eingang mit dem Ausgang des Empfängers (R₁) der ersten Sender/Empfänger-Einheit (1) verbunden sind und mit einem zweiten Eingang mit dem Ausgang der ersten Phasenverriegelungsschleife (11a), direkt für den ersten Mischer (16a) und über einen 90°-Phasenschieber (16c) für den zweiten Mischer (16b), verbunden sind, wobei der Ausgang des ersten Mischers über eine erste Tiefpassschaltung (19a) mit einem ersten Ausgang (Q) des Quadratur-Doppelmischers verbunden ist und der Ausgang des zweiten Mischers über eine zweite Tiefpassschaltung (19b) mit einem zweiten Ausgang (I) des Quadratur-Doppelmischers verbunden ist

11. System nach Anspruch 10, **dadurch gekennzeichnet, dass** einer der ersten und zweiten Ausgänge (Q und I) des Quadratur-Doppelmischers (16) mit dem Dateneingang (D) einer D-Kippschaltung (26) verbunden ist, während der Andere der ersten und zweiten Ausgänge des Quadratur-Doppelmischers mit dem Takteingang (CK) der Kippschaltung verbunden ist und der Ausgang (Q) der Kippschaltung über die Gatterschaltung (23) unter der Steuerung der Analyseschaltung (22) mit der Verarbeitungs- oder Verwendungsschaltung (24) verbunden ist.

12. System nach Anspruch 11, **dadurch gekennzeichnet, dass** die Analyseschaltung (22) mit dem Ausgang eines der ersten und zweiten Tiefpassfilter (19a und 19b) des Quadratur-Doppelmischers (16) verbunden ist.

13. System nach Anspruch 7, **dadurch gekennzeichnet, dass** die erste und die zweite Zahl (N1 und N2) verschiedene Werte haben, derart, dass die zweite und die dritte Frequenz (f₂ und f₃) verschiedene Werte besitzen, dass das Filter (29) ein Bandpassfilter (29) ist und dass die Analyseschaltung (22') umfasst:
a) einen weiteren Frequenzteiler (31), der emen Eingang, der mit dem Ausgang des Bandpassfilters (29) verbunden ist, und einen Ausgang, der ein viertes Signal mit einer Frequenz liefert, die gleich dem Quotienten aus der Frequenz des das Bandpassfilter (29) verlassenden gefilterten Signals und der ganzen Zahl (N3 = |N2 - N1|) ist, besitzt;
b) einen weiteren Mischer (32), der einen ersten Eingang, der mit dem Ausgang des weiteren Frequenzteilers (31) verbunden ist, um das vierte Signal zu empfangen, einen zweiten Eingang, der mit dem ersten Signalgenerator (3) der ersten Sender/Empfänger-Einheit (1) verbunden ist, um das erste Signal mit der ersten Frequenz (f₁) zu empfangen, und einen Ausgang, der ein weiteres Mischsignal liefert, besitzt;
c) ein Tiefpassfilter (19), das einen Eingang, der mit dem Ausgang des weiteren Mischers (32) verbunden ist, und einen Ausgang, der ein Schwebungssignal zwischen dem vierten und dem ersten Signal liefert, besitzt;
d) und eine Schaltung (22), die mit dem Ausgang des Tiefpassfilters (19) verbunden ist und feststellt, ob das Schwebungssignal eine Frequenz von null besitzt, was angibt, dass das durch den Empfänger (R₁) der ersten Sender/Empfänger-Einheit (1) empfangene Signal das zweite Signal mit der zweiten Frequenz (f₂) ist, oder ob es eine von null verschiedene Frequenz hat, was angibt, dass das durch die erste Einheit empfangene Signal ein unzulässiges parasitäres Signal ist.

14. System nach einem der Ansprüche 6 bis 13, das in einem Zugangssystem des sogenannten "Freihand"-Typs verwendbar ist, das den Zugang zu einem geschlossenen Raum, insbesondere zu einem Kraftfahrzeug, und/oder die Ausführung einer Funktion in dem geschlossenen Raum, beispielsweise das Starten des Kraftfahrzeugs, ermöglicht und eine Erkennungsvorrichtung, die in dem geschlossenen Raum installiert ist, und ein Identifizierungsorgan, das dazu vorgesehen ist, von einem Anwender getragen zu werden, umfasst, wobei der Zugang zu dem geschlossenen Raum und/oder die Ausführung der Funktion nur zugelassen wird, wenn die Erkennungsvorrichtung das Identifizierungsorgan als berechtigt erkannt hat, **dadurch gekennzeichnet, dass** die erste Sender/Empfänger-Einheit (1), in der die erste Phasenverriegelungsschleife (11a), der Mischer (16), das Filter (19; 29), die Analyseschaltung (22; 22') und die Gatterschaltung (23) enthalten sind, in der Erkennungsvorrichtung installiert ist, während die zweite Sender/Empfänger-Einheit (2), in der die zweite Phasenverriegelungsschleife (11b) enthalten ist, in der Identifizierungsvorrichtung installiert ist.

## Claims

1. Two-directional wireless transmission method for transmitting data between two transceiver sets, the transmitter in the first of the two sets generating a first signal at a first frequency (f₁) that is transmitted to the receiver in the second of the two sets, and the transmitter in the second of the two sets generating a second signal at a second frequency (f₂) that is transmitted to the receiver in the first set, **characterised in that** it consists of:
a) at the first set, generating a third signal from the said first signal at the first frequency (f₁) by means of a first phase locked loop, with a third frequency (f₃) that is equal to the first frequency (f₁) multiplied by a first number (N1);
b) at the second set, generating the said second signal from the first signal received by the said second set, by means of a second phase locked loop, such that the second frequency (f₂) of the second signal is equal to the first frequency (f₁) multiplied by a second number (N2);
c) at the first set:
c1) mixing a signal received by this first set with the third signal generated by the first phase locked loop, in order to obtain a mixing signal;
c2) filtering the mixing signal in order to obtain a filtered signal with a frequency corresponding to the difference between the frequency of the signal received by the first set and the third frequency (f₃) of the third signal;
c3) analysing the said filtered signal to determine if it has a predetermined frequency that is equal to the first frequency (f₁) multiplied by a positive or zero integer number (N3) equal to the absolute value of the difference (|N2 - N1|) between the first and second numbers (N1 and N2), and that indicates that the signal received by the first set is the second signal at the second frequency (f₂) transmitted by the second set, or if its frequency is different from the said predetermined frequency and that indicates that the said signal received by the first set is an unauthorised parasite signal;
c4) authorising processing or use of the said signal received by the first set only if the result of the analysis indicates that the frequency of the filtered signal is equal to the said predetermined frequency.

2. Method according to claim 1, **characterised in that** the first and second numbers (N1 and N2) have the same value (N) such that the second and third frequencies (f₂ and f₃) have the same value, the said predetermined frequency having a zero value, and **in that** the analysis of the filtered signal (step C3) consists of determining if the frequency of the filtered signal is zero indicating that the signal received by the first set is the second signal transmitted by the second set, or if it has a non-zero frequency indicating that the said signal received by the first set is an unauthorised parasite signal.

3. Method according to claim 2, **characterised in that** it also consists of synchronously varying the second frequency of the second and third signals identically according to a predefined random sequence memorised in the first and second sets.

4. Method according to claim 1, **characterised in that** the first and second numbers (N1 and N2) have different values such that the second and third frequencies (f2 and f3) have different values, and **in that** the analysis of the filtered signal (step c3) consists of:
c3.1) dividing the frequency of the filtered signal by the said integer number (N3) so as to obtain a fourth signal;
c3.2) mixing the fourth signal with the first signal generated by the transmitter in the first set so as to obtain another mixing signal;
c3.3) filtering the said other mixing signal so as to obtain a beat signal with a frequency corresponding to the difference between the frequency of the fourth signal and the first frequency (f₁) of the said first signal; and
C3.4) analysing the said beat signal to determine if its frequency is zero indicating that the signal received by the first set is the second signal transmitted by the second set, or if it has a non-zero frequency indicating that the said signal received by the first set is an unauthorised parasite signal.

5. Method according to any one of claims 1 to 4 for secure two-directional wireless transmission of data in a "hands off" type access system which enables access to a closed space, particularly an automobile vehicle, and / or execution of a function in the said closed space, for example to start the automobile vehicle, and in which a remote data exchange is set up between a recognition device installed in a closed space and an identification device to be carried by a user, the access to the closed space and / or execution of the said function only being authorised when the recognition device has authenticated the identification device, **characterised in that** it consists of generating the said first and third signals at the recognition device and the said second signal at the identification device, and authorising processing of the said signal received by the recognition device for authentication of the identification device only if the result of the said analysis indicates that the frequency of the said filtered signal is equal to the said predetermined frequency.

6. Two-directional data transmission system for use of the method according to any one of claims 1 to 5, comprising two transceiver sets (1 and 2), the transmitter (E₁) in a first of the two sets comprising a first signal generator (3) that generates a first signal at a first frequency (f₁) and that is connected to a first antenna (4) transmitting the said first signal to the receiver (R₂) in the second of the two sets, and the transmitter (E₂) in the second of the two sets comprising a second signal generator (11b) that generates a second signal at a second frequency (f₂) and that is connected to a second antenna (6) transmitting the said second signal to the receiver (R₁) in the first set, **characterised in that**:
a) the first set (1) also comprises a first phase locked loop (11a), the input of which is connected to the first signal generator (3) to receive the said first signal at the first frequency (f₁) as a reference signal, and that outputs a third signal with a third frequency (f₃) that is equal to the first frequency (f₁) multiplied by a first number (N1);
b) the second signal generator (11b) in the second set (2) is composed of a second phase locked loop, the input of which is connected to the receiver (R₂) in the said second set to receive the said first signal (f₁) transmitted by the said first antenna (4) as a reference signal, and the output of which is connected to the said second antenna (6) to transmit the said second signal at the second frequency (f₂), the second loop (11b) being designed such that the said second frequency (f₂) of the second signal is equal to the first frequency (f₁) multiplied by a second number (N2);
c) the first set (1) also comprises a mixer (16) with a first input connected to the receiver (R₁) in the said first set (1), a second input connected to the first loop (11a) to receive the said third signal, and an output outputting a mixing signal, a filter (19; 29) with an input connected to the mixer output and an output outputting a filtered signal with a frequency corresponding to the difference between the frequencies of the signals applied to the first and second inputs of the mixer, an analysis circuit (22; 22') that is connected to the output of the filter (19; 29) and that determines if the filtered signal is at a predetermined frequency that is equal to the first frequency (f₁) multiplied by a positive or zero integer number (N3) equal to the absolute value of the difference (|N2 - N1|) between the first and second numbers (N1 and N2) and a gate circuit (23) connected to the analysis circuit (22) and to the receiver (R₁) in the said first set and that allows the said signal received by the receiver in the first set to pass to a circuit (24) for processing or use of the said received signal, only if the said analysis circuit has determined that the said filtered signal is at the said predetermined frequency.

7. System according to claim 6, **characterised in that** each of the first and second phase locked loops (11a and 11b) comprises a phase detector (12a, 12b) that receives the said first signal on a first input at the first frequency (f₁), and the output of which is connected through an integrator circuit (13a, 13b) and a low-pass filter (14a, 14b) mounted in series, to the control input of a voltage controlled oscillator (15a, 15b), the output of which is connected through a frequency divider (17a, 17b) to a second input of the said phase detector, the output of the voltage controlled oscillator (15a) of the first loop (11a) outputting the said third signal at the third frequency (f₃) and the output of the voltage controlled oscillator (15b) of the second loop (11b) outputting the said second signal at the second frequency (f₂), the frequency divider (17a) of the first phase locked loop (11a) dividing the frequency by the said first number (N1) and the frequency divider (17b) of the second phase locked loop (11b) dividing the frequency by the said second number (N2).

8. System according to claim 7, **characterised in that** the first and second numbers (N1 and N2) have the same value (N) such that the second and third frequencies (f₂ and f₃) have equal values, the said predetermined frequency having a zero value, **in that** the said filter (19) is a low-pass filter outputting a beat signal between the signal received by the receiver (R₁) in the first transceiver set (1) and the said third signal at the third frequency (f₃), and **in that** the said analysis circuit (22) determines if the frequency of the said beat signal is equal to zero indicating that the signal received by the receiver (R₁) in the first transceiver set (1) is the said second signal at the second frequency (f₂), or if the frequency is not zero indicating that the said signal received by the said first set is an unauthorised parasite signal.

9. System according to claim 8, **characterised in that** each of the first and second sets (1 and 2) comprises a means (9, 25) of memorising a predefined random sequence of values and to make the said value (N) of the first and second numbers (N1 and N2) in the corresponding frequency divider (17a or 17b) in each of the first and second phase locked loops (11a, 11b) vary, according to the said predefined random sequence, synchronously and identically for the two loops.

10. System according to claim 9, **characterised in that** the said mixer (16) is a double mixer with quadrature comprising a first and a second mixer (16a, 16b) each of which has a first input connected to the output from the receiver (R₁) in the said first transceiver set (1) and a second input that is connected to the output from the first phase locked loop (11a) directly for the first mixer (16a) and through a phase shifter (16c) at 90° for the second mixer (16b), the output from the first mixer being connected through a first low-pass circuit (19a) to a first output (Q) from the double quadrature mixer and the output from the second mixer being connected through a second low-pass circuit (19b) to a second output (I) from the said double quadrature mixer.

11. System according to claim 10, **characterised in that** either the first or the second output (Q and I) of the double quadrature mixer (16) is connected to the data input (D) of a D type flip-flop (26), the other of the first and second outputs from the double quadrature mixer is connected to the clock input (CK) of the said flip-flop, and the output (Q) of the said flip-flop is connected to the said processing circuit (24) or usage circuit through the said gate circuit (23), under control of the said analysis circuit (22).

12. System according to claim 11, **characterised in that** the said analysis circuit (22) is connected to the output of either the first or second low-pass filter (19a and 19b), of the double quadrature mixer (16).

13. System according to claim 7, **characterised in that** the first and second numbers (N1 and N2) have different values, such that the second and third frequencies (f₂ and f₃) have different values, and **in that** the said filter (29) is a pass-band filter, and **in that** the said analysis circuit (22') comprises:
a) another frequency divider (31) with an input connected to the output of the said pass-band filter (29) and an output outputting a fourth signal with a frequency equal to the quotient of the frequency of the filtered signal output from the pass-band filter (29) divided by the said integer number (N3 = |N2 - N1|);
b) another mixer (32) with a first input connected to the output of the said other frequency divider (31) to receive the said fourth signal, a second input connected to the first signal generator (3) of the said first transceiver set (1) to receive the said first signal at the first frequency (f₁), and an output outputting another mixing signal;
c) a low-pass filter (19) with an input connected to the output from the other mixer (32) and an output outputting a beat signal between the said fourth and first signals;
d) and a circuit (22) connected to the output from the low-pass filter (19) and that determines if the frequency of the said beat signal is zero indicating that the signal received by the receiver (R₁) in the first transceiver set (1) is the said second signal at the second frequency (f₂), or if it is non-zero indicating that the said signal received by the said first set is an unauthorised parasite signal.

14. System according to any one of claims 6 to 13 that can be used in a "hands off" type access system that enables access to a closed space, particularly an automobile vehicle, and / or execution of a function in the said closed space, for example to start the automobile vehicle, and that comprises a recognition device installed in the closed space and an identification device to be carried by a user, access to the closed space and / or execution of the said function only being authorised when the recognition device has authenticated the identification device, **characterised in that** the said first transceiver set (1), including the first phase locked loop (11a), the mixer (16), the filter (19; 29), the analysis circuit (22; 22') and the gate circuit (23), are installed in the recognition device, while the said second transceiver set (2), including the second phase locked loop (11b), are installed in the said identification device.
